# EUROPEAN PATENT APPLICATION

(11) **EP 4 191 510 A1**
(43) Date of publication of application: **07.06.2023**
(21) Application number: 20947347.9
(22) Date of filing: 28.07.2020
(51) Int. Cl.: G06Q 50/28, G09F 19/22, G06Q 50/30, G06Q 90/00, G06Q 10/02, G06Q 10/00

(54) **SYSTEM AND METHOD FOR PROCESSING BOARDING INFORMATION AND GENERATING AN ORGANIC VIRTUAL GUIDE, CORRESPONDING EQUIPMENT AND COMPUTER-READ MEMORY**

(71) Applicant: Pocai, Ricardo, 85530-000 Clevelândia - Paraná (BR)
(72) Inventor: Pocai, Ricardo, 85530-000 Clevelândia - Paraná (BR)
(74) Representative: Zacco Denmark A/S
(86) International application number: PCT/BR2020/050292
(87) International publication number: WO 2022/020911

(57) **Abstract**

The present disclosure relates to a system and method for processing boarding information and generating an organic virtual guide (130). The present disclosure also relates to equipment for processing boarding information and generating an organic virtual guide (130). The present disclosure further relates to a computer-readable memory comprising a computer program for processing boarding information and generating an organic virtual guide (130).

## Description

### Technical Field

The present disclosure belongs to the field of data and information processing, planning, organization and allocation of resources, as well as people transport logistics.

### Introduction

The present disclosure relates to a system and method for processing boarding information in an airport infrastructure, as well as for generating an organic virtual guide, aimed at optimizing resources, especially time and human resources, by informing, organizing and guiding people for accessing and/or boarding an aircraft and other places with orderly occupation and occupation sequencing.

### Background

The constant commitment generated by the need to simultaneously increase efficiency, profitability, and passenger satisfaction, keeps airlines uninterruptedly and increasingly under pressure, seeking time optimization, especially ground time reduction.

While the boarding step is only part of a broader and more complex aviation process, it is one of the most critical and costly events. The substantial reduction in boarding times reduces the aircraft's ground time and the physical occupation of airports, thus reducing logistics and operating costs and the demand for labor, improving the use of ground equipment, and reducing the emission of pollutants.

Finally, the adoption of optimized boarding strategies benefits not only airlines, but also the environment, airport operators and, as a measure to ensure passenger comfort and loyalty, passengers, since boarding processes directly and greatly influence the passenger's quality perception of the service provided.

Technical and logistical solutions that help in the search for shorter boarding times and that, as a whole, strive to reduce aircraft ground time, have been challenging technicians and engineers around the world for several years.

### Prior Art

Various solutions are known from prior art for organizing queues and directing and guiding individuals to or from a queue, following a predetermined set of rules, such as, for example, the solution disclosed by US patent No. US20060206353A1, which describes a method and system for intelligent queue management that uses a virtual destination locator to guide queue members using a pre-allocated final destination assignment. The guide arranges the queue members into a sequence and then guides them to the final destination by moving the virtual destination location in accordance with the sequence.

Essentially, the method of US20060206353A1 intends to manage the entry of queue members through an entrance, comprising the steps of identifying a plurality of queue members, wherein each member has an allocated final destination, mapping each final destination onto a virtual destination location, guiding each queue member, using the virtual destination location, towards the corresponding final destination through the steps of determining a sequence in which the queue members should pass through the entrance, and controlling queue members using virtual destination locations, so that each queue member does not delay other queue members in the sequence as each moves to their respective final destinations. The boarding sequence is determined by managing a row (row n) which is further from the entrance than a row which is nearer the entrance (row m) and not yet occupied by passengers, i.e., always in row groups from a further row (n-1) to a nearer row (m-1), until the seats are filled, following the "back-to-front" boarding parameter.

It should be noted that the solution suggested by US20060206353A1 has some disadvantages. Despite providing constant updating of the instructions given to passengers, said system update depends on a specific instruction to update the boarding conditions, made by the airline's ground boarding staff, either manually or through a boarding pass reading device, because the system will call the next group to board only after a ground boarding agent (or equipment) informs that a certain group has fully boarded, which can slow down the process.

On the other hand, the coding of the boarding situation or condition using, for example, the acronyms P, E, PBP and NS projected on the boarding plan and visible to passengers, in addition to not making a difference nor being of interest to passengers, since each passenger will be concerned with its own boarding, it can also confuse them and, eventually, generate indecision and, as a result, delays in boarding.

Furthermore, as seen above, the upgrade sequence always considers sequential row groups, which results in very little or no margin of safety and comfort for boarding. Considering the example of US20060206353A1 of an aircraft with rows from "m" to "n", the system and method start by instructing passengers to board from a further row "n", for example, row number 30, to a near row "m", e.g. row No. 26, the boarding starting with a set of rows, from row 30 ("n") to row 26 ("m"). After boarding the furthest row "n" or 30, a boarding agent (or equipment) activates the update, and the system, after being updated, starts calling passengers from rows "n-1" to "m-1" or 29 to 25 and, after boarding row 29 and a new update from the boarding agent, it starts calling rows 28 to 24, and so on. This solution only considers the conditions of passengers at or near the entrance of the aircraft, disregarding how passengers in the airport's boarding area and those who already boarded are accommodated, thus not solving the problem of space occupied in the aisle by passengers standing and/or storing luggage or hand belongings and/or standing up again to allow another passenger to be accommodated.

Despite citing the projection of the boarding plan onto the ground, document US20060206353 A1 does not make any reference or suggest how the projection should be made and, in particular, how the projection's updating behaves in case there is no movement of passengers or in case of displacement or movement that is different from that expected. Therefore, US20060206353 A1 does not teach or suggest an organic movement guidance for passengers during boarding, which is capable of adapting to real-life conditions and their day-to-day exceptions.

Another solution for orderly boarding, which repeats the deficiencies of passenger congestion and discomfort described above, is the one disclosed by German patent No. DE102009058848 A1, which presents and describes a device for preparing passengers for orderly boarding a transport, disclosing a barrier-shaped device to guide and direct passengers in a departure lounge according to boarding sequences, which provides for the use of projections onto the ground, wall, ceiling, etc., but without further detail. Furthermore, DE102009058848 does not teach or suggest an organic guidance for passenger movement during boarding.

Patent document No. WO201622209 A1 describes a method and apparatus for aircraft boarding that use ground projection of the aircraft seat configuration so that each passenger takes their position already in the departure lounge, also following the aircraft boarding order from back to front and also from the window to the aisle. In addition to requiring considerable space in airport departure areas, the solution of WO201622209 A1 is not concerned with the space condition of passengers who already boarded, it depends on specific commands to instruct/start boarding and fails to describe how boarding conditions are updated. There is also no reference to an organic passenger movement guidance during boarding.

Similar orderly boarding conditions and, as a result, similar disadvantages are found in the solution disclosed by Chinese patent No. CN104386261 B, which, unlike the documents described above, provides for the use of a carpet or runner, which needs to be physically handled by the ground staff, resulting in inconveniences that require no further details.

Finally, it is also worth mentioning the methods currently employed by airlines, ranging from simple single-queue or multiple-queue boarding to group or category boarding. The first type needs no further comments, as it has the obvious disadvantages of conventional boarding. As for the group or category boarding methods, by which boarding is carried out, for example, boarding window seat passengers first, then middle seat passengers and finally aisle passengers, boardings subdividing the plane into two parts, rear and front, starting by boarding passengers from the rear and then from the front also do not eliminate congestion and long waiting times for passengers, considering here both standing time and sitting time, both on the ground and inside the aircraft.

It should be noted that none of the methods of the relevant prior art allows the passenger upon boarding to simultaneously (i) know or understand their sequence of entry into the aircraft, (ii) have flexible and sufficient physical space to be and move around on the ground and (iii) manage to access the aircraft without delaying the boarding of other passengers.

Furthermore, the current technique does not teach the use of a projection to guide the boarding with simultaneous organic movement of this projection according to the movement of passengers, much less a projection according to waves formed by groups of passengers.

It is also worth noting that none of the solutions known from the aforementioned prior art is intuitive enough to make boarding a simpler task for passengers, improving airline user experience and alleviating the boarding crew and agents on land.

As can be inferred from the above descriptions, there is room for a corresponding system, method, equipment, and computer program that overcome the deficiencies of the prior art and that represent a simple and economical solution, which is intuitive for both user and operator, easily installed, flexible and which adapts to and does not compromise the pre-existing airport infrastructure, which is capable of reducing passenger waiting time, facilitating the sorting and handling of passengers in an organic way towards their boarding and, above all, reducing aircraft ground time.

### Objects of the Disclosure

One of the objects of the present disclosure is, therefore, a system for processing boarding information and generating an organic virtual guide, according to the features of claim 1 of the attached set of claims.

Another object of the present disclosure is a method for processing boarding information and generating an organic virtual guide, according to the features of claim 10 of the attached set of claims.

Another object of the present disclosure is equipment for processing boarding information and generating an organic virtual guide, according to the features of claim 28 of the attached set of claims.

Still another object of the present disclosure is to provide a computer-readable memory comprising a computer program for processing boarding information and generating an organic virtual guide, according to the features of claim 29 of the attached set of claims.

Other features and feature details are represented by the dependent claims.

### Brief Description of the Figures

For better understanding and visualization of the object of the present disclosure, it will now be described with reference to the attached figures, representing the technical effect obtained through exemplary embodiments not limiting the scope of the present disclosure, in which, schematically:
Figure 1 shows a partial top view of the interior of an exemplary aircraft for explanation and detailed description of the system, method, equipment, and computer-readable memory as disclosed herein, showing the first wave split into eight passenger groups;
Figure 2 shows a plan view of an information/instruction display device as disclosed herein, showing a start image;
Figure 3 shows a perspective view of a system projecting a carpet-like virtual guide as disclosed herein;
Figure 4 shows a perspective view of a system projecting a carpet-like virtual guide as disclosed herein, with passengers positioned on the carpet;
Figure 5 shows a perspective view of the virtual guide in Figure 4, representing the system's reading and identification, in the boarding direction, of passengers on the carpet and, in particular, of the last passenger of each cloth of the carpet;
Figure 6 shows a partial top view of the virtual guide in Figure 4, representing the first passengers leaving the carpet and the corresponding cloth moving towards the access to the aircraft;
Figure 7 shows a partial top view of the virtual guide in Figure 6, representing the continuous boarding and the movement of the corresponding cloth towards the access to the aircraft;
Figure 8 shows a partial top view of the virtual guide in Figure 6, representing the continuous boarding and the movement and size changes of the cloths, following the position of the last passenger of each cloth; and
Figure 9 shows a partial top view of the virtual guide in Figure 6, representing the final stage of boarding, the movement and size changes of the cloths, following the position of the last passenger of each cloth, also showing the final cloth indicating the completion of the boarding procedures.

### Detailed Description of the Disclosure

The following detailed description makes reference to the accompanying drawings in which embodiments of the present disclosure are shown by way of non-limiting illustration. These embodiments are described in order to allow a person skilled in the art to reproduce their results. Other embodiments resulting from structural, mechanical, logical, electrical, and electronic changes are possible and can be carried out without departing from the spirit and scope of the present disclosure. The following detailed description is therefore not to be construed as restrictive or limiting.

The present disclosure relates to a system and method for processing boarding information and generating an organic virtual guide, as well as corresponding equipment and computer programs, aimed at optimizing resources, especially time and human resources, by informing, organizing and guiding people for accessing and/or boarding an aircraft and other places with orderly occupation and occupation sequencing, and which, in short, will lead passengers with instructions and indications on how to proceed, by sequentially and organically displaying the numbers of seats and/or rows and/or groups and/or waves to be boarded, according to each situation and chosen boarding regime.

In the context of the present disclosure, the term "organic" refers to how the virtual guide of the invention moves. The advancing of the different segments or cloths of the carpet-like guide is controlled by the advancing of the people positioned on it, depending, therefore, on the passengers' movement and, therefore, being naturally dynamic or organic, like a living organism.

In the context of the present disclosure, the definition of "orderly occupation and occupation sequencing" refers to accommodations where people have predetermined destination locations and access sequence, for example, in aircrafts and other means of collective transport. It should be understood that, in a broader context, the system and method herein can also be extended to theaters, cinemas, gyms, supermarkets and other places and situations that eventually demand a specific occupation and/or ordered sequence of occupation of the spaces destined to the people who will occupy them. In any case, the present disclosure will be described based on examples of aircraft boarding procedures, however, as described above, without limiting its scope of protection.

Also in the context of the present disclosure, the term "seat" refers to the final accommodation of each occupant of the aircraft, which may be armchairs, benches, sofas, chairs and any other means of support and accommodation of people, while the term "row" refers to one or more groupings and/or divisions and/or subdivisions of seats.

The term "group", as used herein, refers on the other hand to groups and/or divisions and/or subdivisions of people who will access the aircraft, which may be groups formed by one or more people with qualitative and quantitative features depending on the means of transport concerned, i.e., the number, grouping, and physical arrangement of seats available within the means of transportation.

The term "wave", also as used herein, refers to one or more sets of one or more groups of people, as described, for example, in patent document PCT/BR2019/050026, which addresses a method for boarding by waves formed by groups and is incorporated herein by reference.

### System according to the disclosure

A **system for processing boarding information and generating an organic virtual guide** as disclosed herein presupposes a physical airport structure and at least one boarding area of the physical airport structure, and comprises:
(i) one or more servers;
(ii) one or more processors;
(iii) one or more communication and data networks;
(iv) one or more databases;
(v) one or more sets of information;
(vi) one or more sets of instructions;
(vii) one or more information/instruction acquisition devices (110);
(viii) one or more information/instruction display devices (120);
(ix) at least one computer program stored on computer-readable medium; and
(x) eventually and additionally, any and all devices and/or equipment necessary for the operation of the system to carry out a method for processing boarding information and generating an organic virtual guide.

Servers, processors, databases, information/instruction acquisition devices (110), information/instruction display devices (120), and other devices and/or equipment are all interconnected by one or more communication and data networks. Images and data are stored as one or more electrical signals and the processing of these signals is done by one or more components of the system as disclosed herein.

### Server

A server is, in the context of the disclosure, a software or computer, with one or more centralized computing systems or one or more data processing centers, which provides or stores services and resources in and via a communication and data network. It includes one or more electronic processors capable of executing tasks from a computer program stored in a computer-readable medium, preferably a computer equipped with a processor, memory for data storage, connection to one or more communication and data networks and one or more remote databases and/or an information storage and retrieval environment, locally and/or centralized and/or decentralized and/or in the cloud, and also equipped with all the usual peripherals of the prior art, being able to exchange information with electronic and physical media, interfaces, applications, mobile equipment, other memory devices, etc.

A server can be at least a web server that delivers or serves web pages, an application server that handles application operations between users and applications or databases, a cloud server, a database server, a file server, a service server, a game server implementing games or services for a game, and a media server providing media such as video or audio streaming.

The system disclosed herein may include one or more processors to process commands and information according to instructions of computer programs and one or more memories that store information in one or more data structures, which may be a centralized boarding management system or network, such as, but not limited to, a server that may be privately run by a third party or by the same entity that is running the server.

The system can also be conceived as a publicly accessible network system (e.g., a distributed decentralized computing system). Each processor includes memory that stores information and data and can run one or more programs to execute various functions associated with the system and method disclosed herein.

### Processor

A processor is, in the context of the disclosure, a central processing unit or CPU that performs instructions of a computer program, by processing and executing arithmetic and logical operations and the input and output of data, the computer program being stored in a computer-readable medium with memory for data storage, connection to one or more communication and data networks and to one or more remote databases and/or an information storage and retrieval environment, locally and/or centralized and/or decentralized and/or in the cloud, and also equipped with all the usual peripherals of the prior art, being able to exchange information with electronic and physical media, interfaces, applications, mobile equipment, other memory devices, etc.

A processor as disclosed herein may be, form part of or be divided into one or more modules. The term "module", as used herein, refers to an application-specific integrated circuit (ASIC), an electronic circuit, a processor (shared, dedicated or group of processors) and a memory that executes one or more software or firmware programs. It also refers to a combinational logic circuit and/or other suitable components capable of providing the relevant functionalities.

### Communication and Data Network

A communication and data network is a centralized or decentralized network that interconnects one or more active or passive components of the system as disclosed herein. Servers, processors, central data processing, database, and display (120) and acquisition (110) devices may be connected to one or more airport communication and data networks, physical memories, in a cloud and the like, to the internet, to one or more data clouds and/or programs, computer terminals, mobile devices, telephone devices, ticket and boarding pass readers, credit cards, NFC or BLE devices, check-in counters, travel agencies, in short, to any equipment or interface that is directly or indirectly necessary for executing a method as disclosed herein.

The communication and data network may include any wired or wireless connection, the internet or any other form of communication, and may include any number of different communication and data networks between any server, devices, resource, and system and/or other servers, devices, resources, and systems described herein. The communication and data network may allow communication between various computing resources or devices, servers and systems, and may employ different types of networks, such as, but not limited to, computer networks, telecommunications networks (such as cellphone devices), wireless mobile data networks, wired, radio and related data networks and any combination of these and/or other networks.

### Database

A database as disclosed herein is any set of data, files, information, instructions, and records that form organized collections of data that relate to each other and can be accessed, fed and managed by the data processing center as disclosed herein.

### Set of Information

A set of information as disclosed herein is a set of data acquired and/or transmitted and/or stored by and in one or more of the components of the system disclosed herein and comprises all information relevant to passengers and for boarding an aircraft (AE) at an airport facility. Non-limiting examples of such information are airline data, aircraft data (AE), boarding regime, data from ground and on-board staff, passenger data and other information relevant to airport operations.

*Airline data* include, but are not limited to, the airline, terminal and boarding gate, schedules, baggage limitations and other related information and the like.

*Aircraft data (AE)* include, but are not limited to, the equipment type, number of seats (A), maximum occupancy, cargo capacity and other related information and the like.

*Boarding regime* refers to information regarding the chosen boarding method, comprising, but not limited to, the number of passengers to board, number of gates and boarding gates, occupancy rate, formation of groups and/or waves, priority boarding, preferential boarding, boarding by classes, boarding respecting other specific subdivisions of each airline and other related information and the like.

*Data from ground and on-board staffs* refer to all relevant and necessary data from the people involved in the boarding procedures.

*Passenger data* comprise, but are not limited to, the number of passengers, desired destination position of each passenger, initial position before boarding, position during boarding before the gate or access to the aircraft (AE), movement patterns, any preferences, limitations, priorities, age, height, and other related information and the like.

*Information relevant to airport operation* include, but are not limited to, runway conditions, weather conditions, boarding time, any delays, updating and/or changes in boarding information (for example, change of boarding gate, boarding time, etc.) and other related information and the like.

### Set of Instructions

A set of instructions, as disclosed herein, comprises one or more sequential and/or non-sequential, single and/or repeated instructions, the set of instructions being acquired and/or transmitted and/or stored by and in one or more of the components of the system as disclosed herein.

Instructions may be executed and/or stored by and in a server, in a processing center, in an information display device (120) and in an information acquisition device (110), and may also be stored in one or more databases or other computer-readable, volatile or non-volatile storage medium.

The set of instructions can also be the set of steps and substeps of a method as disclosed herein, which are executed by the system as disclosed herein.

### Information/Instruction Acquisition Device

An information/instruction acquisition device or simply acquisition device (110) as disclosed herein is an interface between the system and users and/or the airport infrastructure, and may include any device capable of processing and storing data and/or information and communicate via the communication and data network, comprising physical, analog, digital, and light sensors and combinations thereof including cameras, lasers, reflectors, light barriers, conventional radars, compatible doppler radars and the like, as well as their own dedicated or shared information display devices (120) such as monitors or auxiliary support displays distributed across the airport infrastructure environments.

Sensors, for example, may be sensors configured to detect the bodily activity of one or more users of the system as disclosed herein, being operationally and/or communicatively connected to one or more of the system's devices.

The acquisition device (110) may therefore comprise any device capable of processing and storing data and/or information and communicating via the communication and data network, and may also include personal computers, servers, code readers, telemetry, biometrics, mobile phones, tablets, laptops, smart devices (such as smart watches, smart TVs). Each information acquisition device (110) may include one or more memories that store information and data and can run one or more programs to execute various functions associated with the system and method disclosed herein. An acquisition device (110) is a device interconnected with one or more components of the system as disclosed herein.

The acquisition devices (110) are components arranged in the airport infrastructure and/or aircraft (AE), directly on the ground and/or suspended over the ground and/or attached to suitable supports. The acquisition devices (110) may further comprise portable and/or mobile components.

### Information/instruction display device (120)

An information/instruction display device (120) or simply a display device (120) of a system as disclosed herein is an interface between the disclosed system and the users and/or the airport infrastructure, comprising a set of visual signaling formed by devices capable of projecting and/or emitting and/or displaying images and lights and of emitting visual and sound signals, being directly connected to the data processing center. These pieces of equipment comprise, in a non-limiting manner, equipment and peripherals for image projection such as projectors, screens, TVs, monitors, light cannons, lights in general and other corresponding and similar elements.

The display device (120) may include any device capable of processing and storing data and/or information and communicating over the communication and data network, and may include personal computers, servers, mobile phones, tablets, laptops, smart devices (e.g., smart watches, smart TVs), code readers, telemetry, biometrics.

Each display device (120) can include one or more memories that store information and data and can run one or more programs to execute various functions associated with the system and method disclosed herein. A display device (120) is a device interconnected with one or more of the disclosed system components.

The display devices (120) are components arranged in the airport infrastructure and/or aircraft (AE), directly on the ground and/or suspended over the ground and/or attached to suitable supports. Display devices (120) may further comprise portable and/or mobile components.

### Computer program

A computer program as disclosed herein is a set of instructions stored on a computer-readable medium and capable of being executed in a system as disclosed herein, for carrying out a method as disclosed herein.

### System operation - organic virtual guide

The system disclosed herein, fed with information and instructions and having access to information, instructions, and updates of said information and instructions, forms a naturally dynamic organic virtual guide, also called a virtual carpet, resulting from the interaction of one or more of its components that execute one or more tasks and subtasks that may or may not be sequential, eventually repeating themselves, individually or in groups, if necessary and depending on the boarding conditions.

Tasks and subtasks are executed using directly or indirectly one or more of the active or passive disclosed system components, based on one or more of the information of the system disclosed herein, according to a disclosed method and, always, according to one or more instructions of the system disclosed herein.

The system operation main steps comprise, in a non-limiting manner, at least one boarding preparation step, at least one boarding step itself and at least one boarding completion step, wherein each of these main steps comprises at least one substep.

The virtual guide for executing these steps is a virtual guide with a naturally dynamic organic operation, which adapts to the movement of passengers during the boarding procedure in an aircraft (AE).

The virtual guide can be displayed on the ground via the display devices (120) arranged under the passengers, or projected onto the ground via the projectors located above the passengers. In both situations, and even in the case of combined use of these solutions, the number of display devices (120) and/or projection devices under and/or over the passengers must be such that no shadows or regions with display (120) faults are formed.

This virtual guide has the form of a dynamic carpet formed by neighboring polygonal shaped cloths, wherein each cloth indicates one or more seats (A) and/or one or more seat rows (A), onto which the passengers will position themselves at the time of boarding. With passengers positioned on the cloths, after the boarding movement begins, the cloths will move adaptively following the passengers movements, with acquisition devices (110) (sensors) arranged on the ground and/or above and/or laterally to the passengers, along with a computer program or application, boarded or accessed via the data processing center, identifying passengers by isolating them from other detected objects, counting and organizing the number of people on/on the virtual guide, detecting their movement and following the flow and speed of each passenger and set of passengers, advancing the instructions for the boarding sequence and the instructions for moving the neighboring cloths, in real time, according to the monitored flow and speed.

The virtual guide will basically display to the passengers} instructions and indications on how to proceed according to the predetermined execution steps, that is, it will sequentially display the numbers of seats (A) and/or rows and/or groups and/or waves to be boarded, according to each situation and chosen boarding regime.

The system disclosed herein performs the virtual guide in the form of a mat projected on or through the ground with a sequence of seats (A) or seat rows (A) represented by polygonal blocks, preferably with alternate colors or other means of visual differentiation of the neighboring blocks, both downstream and upstream, according to the chosen flight aircraft (AE) layout.

At the time of boarding, the blocks (rows) are sorted in the predetermined sequence for said aircraft (AE), for example, blocks that do not have passengers assigned to them and/or occupied only by priority passengers, etc. can be removed, by adjusting the size (surface area) of the projected blocks according to the number of passengers in each row.

The system presents the initial blocks occupying the entire projection area, using one or more projectors in order to eliminate shadow areas.

Eventually, monitors may display a projection area mirroring, along with the next virtual mat blocks to be displayed, which serves as information to passengers.

The virtual guide is arranged in the boarding area of the physical airport structure, preferably in the airport lounges next to the boarding gates, from where the boarding coordination is made according to the method disclosed herein.

### Method as disclosed herein

Once fed with the information described above, the data processing center will be ready to manage the system and promote the information, organization and guidance of people for accessing and boarding an aircraft (AE), which comprises, particularly, the management of the entire system according to the invention by executing a method as disclosed herein.

The **method for processing boarding information and generating an organic virtual guide** disclosed herein basically comprises three main method steps:
A. Boarding preparation step;
B. Boarding step; and
C. Boarding completion step.

Each of the main steps of the method disclosed herein comprises one or more method sub-steps which may or not be sequential and may be repeated individually or in groups if necessary and depending on the boarding conditions.

All steps and substeps of the method disclosed herein are executed by directly or indirectly using one or more of the active or passive disclosed system components, using one or more of the information of the system disclosed herein and always in accordance with one or more instructions of the system disclosed herein.

The interaction between the system components during the execution of the method disclosed herein takes place through their communication with each other via one or more communication and data networks. Images and data are stored as one or more electrical signals and the processing of these signals is done by one or more disclosed system components.

In the context of the disclosure, the term "query" means the query for data, information, and instructions made available/stored in the server, processor, database, and display (120) and/or acquisition (110) devices, performed by one or more system components and/or by one or more authorities responsible for boarding or involved in the boarding procedure, which may even include one or more passengers.

In the context of the disclosure, the term "activate" means the activation and/or instruction of the server, processor, database, and display (120) and/or acquisition (110) devices, performed by one or more system components (for example, activating a task of storing information in the database via the processing center or activating a display device (120) via an acquisition device (110), going through the server and then storing the respective information in the database and so on) and/or by one or more authorities responsible for the boarding or involved in the boarding procedure, which may even include one or more passengers. The term "activate" as an instruction can be a command either to start or to end one or more operations of one or more of the system components.

In the context of the disclosure, the term "receive" means receiving information or an instruction, which may be a relationship between one or more system components with each other or a relationship between one or more system components with one or more authorities responsible for the boarding or involved in the boarding procedure, which may include even one or more passengers.

In the context of the disclosure, the term "process" means the processing of one or more information and/or instructions by one or more system components, including determining (determine) and deciding (decide) operating sequences, guiding of passengers, information/instructions interpretation and data, the processing may also involve interaction with one or more authorities responsible for the boarding or involved in the boarding procedure, which may even include one or more passengers.

In the context of the disclosure, the term "inform" means the transmission (communication) or execution of information by one or more system components to one or more system components, which may be related to one or more of the activities of one or more of the system components and still comprise instructions information. The term "inform" also encompasses the display (120) and publication of information and instructions by one or more of the system components, in particular the information display (120) and acquisition (110) devices.

In the context of the disclosure, the term "store" means storing data in storage devices or memories, in order to be able to retrieve them later.

A non-limiting and only referential example of how the interaction between the system components takes place during the execution of the method for processing boarding information and generating an organic virtual guide disclosed herein, is the beginning of one or more steps/substeps by an activation via the server and/or via the system processor from a start instruction received from one of the acquisition devices (110) connected to the communication and data network, which instruction is fed and/or instructed, for example, by the airport infrastructure or by the ground staff.

This start instruction generates an update of the database connected to the communication and data network, activating one or more display devices (120) connected to the communication and data network, initiating the virtual carpet display and calling passengers to boarding via screens, monitors and/or sound system.

Other acquisition devices (110) connected to the communication and data network monitor the movement of passengers and update the database and the processing center, both connected to the communication and data network, constantly and repeatedly reading passengers position, comparing the positions read to the instructions and information from the database and/or display (120) and/or acquisition (110) devices, eventually generating new instructions for one or more of the components of the system disclosed herein, feeding back the database and updating the display (120) and/or acquisition (110) devices, for example making the carpet cloths advance.

From the example above, the dynamics of the system and method disclosed herein can be seen, and the main steps of the method and its possible substeps are now detailed.

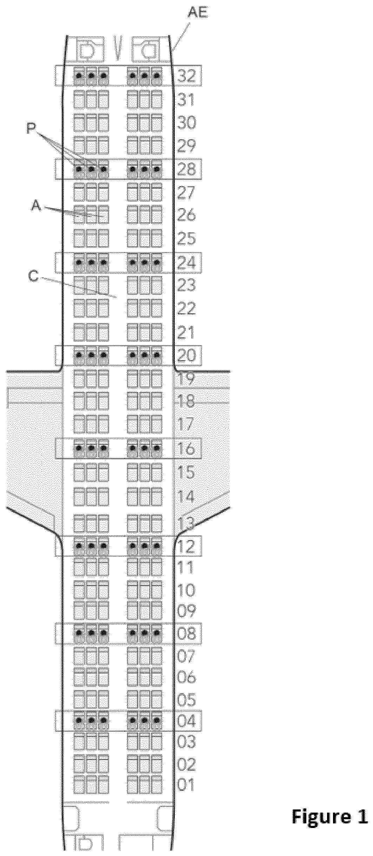

To better illustrate the operation of the system disclosed herein, another non-limiting example will be used. This is an example of the boarding method by waves formed by groups, as described in document PCT/BR2019/050026, by the same patentee and inventor of the present invention. This example is that of an aircraft (AE) with 192 seats (A), with 32 rows of 6 seats (A) each and which will have passengers (P) boarding in waves made up of groups, and for practical purposes, only the first of the four waves will be used and described, this wave being formed by 8 groups of 6 passengers each (Figure 1).

According to this example described in document PCT/BR2019/050026, an aircraft (AE) with 32 rows of 6 seats (A) each, with a spacing between rows of 0.75 meters and with passengers standing in the aisle (C) occupying, on average, a space equivalent to a circumference of 0.5 meters in diameter around it, will have a first group of a maximum of 6 passengers (P) destined to occupy the seats (A) of row 32 with a second group, also a maximum of 6 passengers (P), intended to occupy a row at least 6 passengers distant in the conditions described above, therefore, at least 3 meters or 4 rows away from row 32, that is, to occupy row 28. Similarly, a third group will occupy row 24, a fourth group will occupy row 20, a fifth group will occupy row 16, a sixth group will occupy row 12, a seventh group will occupy row 8 and an eighth group will occupy row 4, completing, then, the first wave boarding, totaling 48 passengers boarded in sequences of 8 groups of 6 people in each group. In the case of this example, therefore, 4 waves will be required to complete the aircraft (AE), boarding 6 passengers for every 24 seats, in a regime referred to herein as 6 by 24.

It should be noted that the occupation of the aircraft (AE) in the example of PCT/BR2019/050026 starts from the row furthest from the entrance of the aircraft (AE), considering the counterflow of boarding, and having a maximum number of passengers limited by the number of seats (A) in each row, which should not be considered as a limiting rule for the possible ways of boarding from a system as disclosed herein.

As a complement to the exemplary information, it should be considered that the data processing center has received and has access to the airline data, aircraft (AE) data, boarding regime, passenger data and other information relevant to the airport operation. It should be noted that the system can be operated even without receiving data from the airline, using an operation model specially configured for cases of absence or interruption of communication and which includes all information relevant to the boarding.

Having made these considerations, the execution of the main steps and the respective substeps of the method disclosed herein begins.

### A. Boarding preparation step:

The boarding preparation step comprises, in a non-limiting manner, the initialization of the system disclosed herein and the boarding procedure preparation.

The **boarding preparation step** comprises the following method substeps:
A1 Receive instruction to start the boarding preparation procedure;
A2 Consult and update boarding information/instructions;
A3 Activate the information/instruction display devices (120) and start the projection of the dynamic virtual guide (130) in the form of a virtual carpet;
A4 Process boarding information and instructions and generate and project a first virtual carpet (130); and
A5 Activate the information/instruction acquisition devices (110) and detect and process the images of the first virtual carpet.

*Substep A1* comprises receiving from the airline and/or the authority responsible for the boarding and/or airport infrastructure and/or ground and/or on-board staff and/or similar an instruction to start the boarding preparation procedure.

*Substep A2* comprises the query by the server or central processor which processes data relevant to the boarding, for example, but not limited to, the airline data, aircraft (AE) data, boarding regime, ground and on-board staff data, passenger data and other information relevant to the airport operation, to update information/instructions. This substep A2 can be repeated one or more times, sequentially or individually or in groups, to update the information whenever necessary, the need for this repetition being defined according to each application. In case of absence or interruption of communication, the operation will be carried out based on previously stored predetermined information.

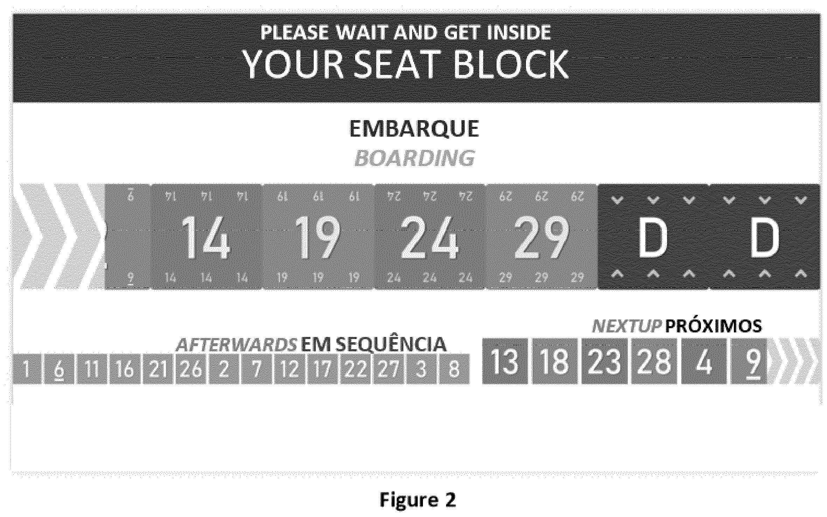

*Substep A3* comprises activating the information/instruction display devices (120) and instructing the projection start of the dynamic virtual guide, displaying an initial image, which can be the flight number, name of the airline, scheduled boarding time, first set of neighboring cloths and/or any information or instruction or graphics or text or image or the like, and may also include information and instructions in the form of a tutorial on how the system works, boarding sequence and the like (Figure 2). It is necessary to reiterate that the display (120) of flight, airline, scheduled boarding time information and the like may be visual or audible or a combination thereof.

In a non-limiting embodiment of the disclosure, sub-step A3 further includes activating one or more monitors displaying an initial image, which may be the same or different from the image of the dynamic virtual guide, which may be the flight number, name of the airline, scheduled boarding time, the first set of neighboring cloths and/or any information or instruction or graphics or text or image or the like, and may also include information and instructions in the form of a system operating tutorial, boarding sequence and the like. (Figure 02).

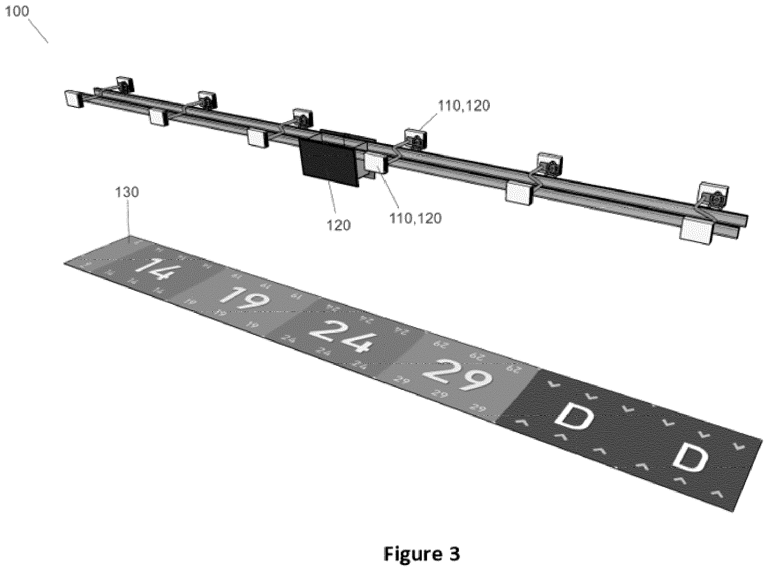

*Substep A4* comprises processing the boarding information and instructions, generating and projecting a first virtual carpet (130) formed by neighboring cloths with the seat or row or group or wave numbers according to the determined boarding regime, in size (surface area) adequate for the number of passengers and in an adequate amount for the space available in the boarding area. The cloths can be polygonal and, preferably, should alternate colors and/or visual pattern to facilitate the distinction and draw the attention of passengers (Figure 3).

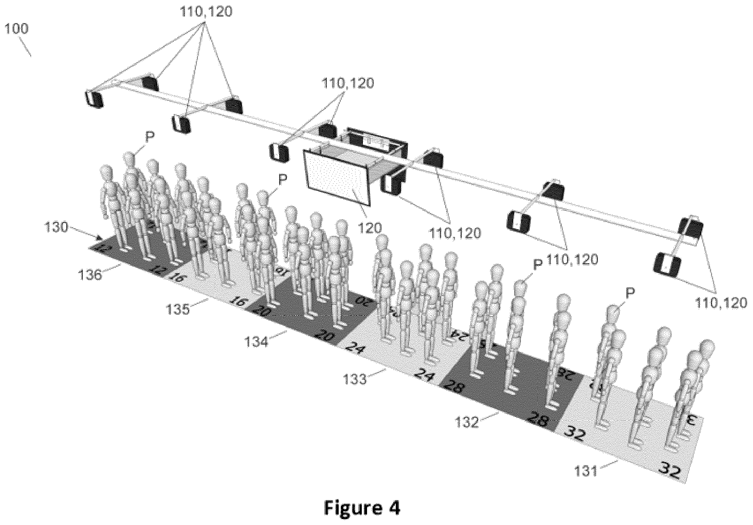

In the case of the example above, a first cloth will be row number 32 (131) seat (A) cloth followed by a second cloth indicating row number 28 (132) seats (A) of and so on, until complete the space available in the boarding area (Figure 4). It should be noted that the sorting of the neighboring cloths (131, 132, 133, 134, 135, 136, 137, 138) of substep A4 can also consider the seats (A) and/or rows that may not have passengers, are occupied by priority passengers, etc.

Considering the boarding example of 8 groups of 6 passengers of a first wave in an aircraft (AE) with 192 seats (A), in substep A4 a first virtual carpet (130) will be projected with an initial cloth (131) of a given color and/or initial visual pattern, measuring, for example, but not limited to, 1.20 meters wide by 1.80 meters long, with the indicative numbering of row 32 (first group of the first wave in the example used). In this shape and size, there is enough space to accommodate the 6 passengers from said row 32.

Immediately after this first cloth (131), another, neighboring cloth (132), is projected, with a color and/or visual pattern different from the first one to facilitate the distinction and draw the attention of passengers, with indicative numbering for row 28, where the 6 passengers in row 28 will be positioned, after that, another cloth indicative of row 24 will be projected (133), and, subsequently, another cloth of row 20 (134), another of row 16 (135) and another of row 12 (136), another of row 8 (137) and another of row 4 (138), preferably alternating colors and/or visual pattern, thus accommodating 36 passengers in this first static image of the virtual guide (130). The example second boarding wave used herein will follow the same logic, as will the third and fourth waves, and so on.

The other passengers must stay in the vicinity of the guide (130) awaiting their positions to be indicated in the virtual guide. It is important to note that this guide (130) may have different measures to have a greater number of cloths (131, 132, 133, 134, 135, 136, 137, 138), accumulating more passengers (P) and/or providing more space and comfort for passengers (P).

It should also be noted that passengers (P) can position themselves on the virtual carpet (130) at any time of boarding, while their respective cloths (131, 132, 133, 134, 135, 136, 137, 138) are in the projection area.

In a non-limiting embodiment disclosed herein, substep 4 includes removing (disregarding) seats (A) or rows for which there will be no passengers (P) or that are occupied only by priority passengers, adjusting the cloths size according to the number of passengers in each seat or row or group or wave assigned to each cloth.

In a non-limiting embodiment disclosed herein, substep A4 further includes activating one or more monitors (120) which display a mirroring of the projection area with the next cloths (131, 132, 133, 134, 135, 136, 137, 138) of the virtual carpet (130) to be displayed, serving as information to passengers (Figure 2).

*Substep A5* comprises activating the information/instruction acquisition devices (110) and detecting and processing the images of the first virtual carpet (130), initiating the cameras or sensors (110) for detecting the images of the virtual carpet (130) displayed or projected, in addition to detecting the presence of people and/or objects on the virtual carpet (130).

It is necessary to further emphasize that substep A2 of consulting and updating the data relevant to the boarding may occur as many times as necessary to update information and between any of the other steps and substeps or even repeating in sequence before another step.

Any other substeps of the first step can also be repeated, alternating with other substeps or even repeating in sequence before another substep, always depending on the specific conditions of each boarding situation and its development, which may include, but is not limited to, cases of access or numbering conflicts, passengers late for boarding, priority passenger, airport conditions, etc.

### B. Boarding step:

The **boarding step** includes, without limitations, the activities of the boarding itself, comprising the following method substeps:
B1 Receive instruction to start the boarding procedure;
B2 Consult and update boarding information/instructions;
B3 Instruct passengers (P) to position themselves on their corresponding virtual carpet (130) cloths (131, 132, 133, 134, 135, 136, 137, 138);
B4 Read and detect the position of passengers (P) on the cloths (131, 132, 133, 134, 135, 136, 137, 138) of the virtual carpet (130);
B5 Read and identify, in the boarding direction, the first and last passengers (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138);
B6 Identify the movement of the last passenger (P₁₃₁) of the first cloth (131) and move the end of the first cloth (131) in the boarding direction by pulling the second (next) cloth (132); and
B7 Repeat substep B6 until the last cloth (138) of the virtual carpet (130) and/or until boarding is complete.

*Substep B1* comprises receiving from the airline and/or the authority responsible for the boarding and/or airport infrastructure and/or ground and/or on-board staff and/or similar the instruction to start the boarding procedure.

*Substep B2* comprises the query by the server or central processor which processes data relevant to the boarding, for example, but not limited to, the airline data, aircraft (AE) data, boarding regime, ground and on-board staff data, passenger data and other information relevant to the airport operation, to update information/instructions. This substep B2 can be repeated one or more times, sequentially or individually or in groups, to update the information whenever necessary, the need for this repetition being defined according to each application. In case of absence or interruption of communication, the operation will be carried out based on previously stored predetermined information.

*Substep B3* comprises formally instructing the passengers (P) to position themselves on the cloths (131, 132, 133, 134, 135, 136, 137, 138) of the virtual carpet (130) that correspond to them. In the case of the example used herein of the aircraft (AE) with 32 rows of 6 seats (A) each, the up to 6 passengers in row 32 must position themselves onto cloth 32 (131), while the up to 6 passengers in row 28 must be positioned onto cloth 28 (132) and so on (Figure 4), until all the projected cloths (131, 132, 133, 134, 135, 136, 137, 138) are occupied by their respective passengers (P). It should be noted that passengers (P) can position themselves on the virtual carpet (130) at any time, which can be during the steps of the first activity or just after a start command, all that is required is that their respective cloths are in the area of projection.

*Substep B4* comprises reading and detecting the position of all objects on the reading fields (cloths) of the virtual carpet (130), from the determination and delimitation of reading fields according to the cloths (131, 132, 133, 134, 135, 136, 137, 138) of the virtual carpet (130), filtering objects of interest from the images, identifying the passengers (P) and thus their exact position on the carpet (130), associating them with the carpet (130) cloth (131, 132, 133, 134, 135, 136, 137, 138) on which they stand.

This reading, detection and filtering can occur continuously or at predetermined time intervals, but always sufficiently enough to update the system properly and capable of maintaining the fluidity of the following substeps. If it is intermittent, a possible range of time interval for reading and capturing repetition can be between 0.1 and 100 milliseconds, preferably 50 milliseconds, which will depend on the speed and processing and communication capacity of the system elements, alone or together.

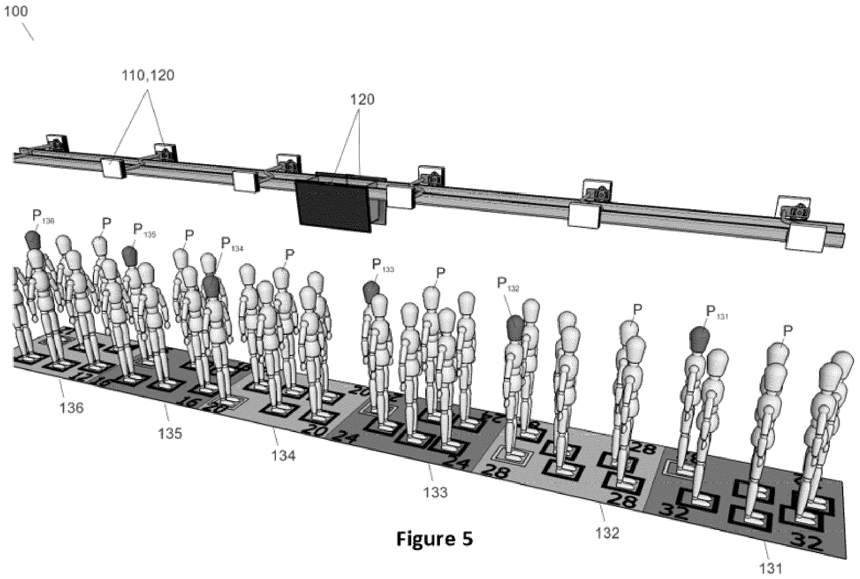

*Substep B5* comprises reading and identifying, in the boarding direction, the first and, particularly, the last passenger (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138) (Figure 5), associating the last passenger (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138) with a cloth end information, thereby detecting any change in position and thus detecting movement.

*Substep B6* comprises identifying the movement of the last passenger (P₁₃₁) of the first cloth (131), updating the end of cloth information and moving the end of the first cloth (131) in the boarding direction, therefore, moving or "pulling" the second (next) cloth (132) also in the boarding direction and so on. As the passengers (P) of the firsts cloth (131) move towards the access to the aircraft (AE), they leave the projection and sensing area of the virtual carpet (130), no longer being detected by the system.

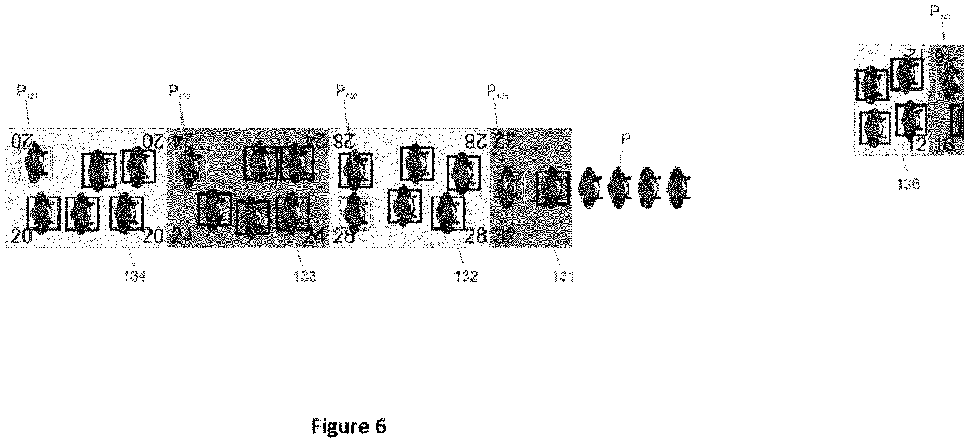

As the last passenger (P₁₃₁) of the first cloth (131) moves, the second (next) cloth (132) moves towards the access to the aircraft (AE) (Figure 6), promoting a constant movement or sliding of the cloths (131, 132, 133, 134, 135, 136, 137, 138) of the virtual carpet (130) forming a virtual mat that meets two specific criteria: (i) the beginning of each new cloth follows the cloth in front of it (downstream); (ii) the end of each cloth waits for the last passenger to move onto it.

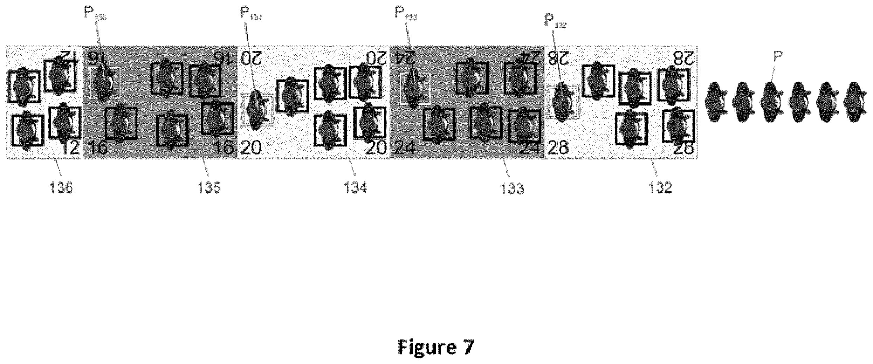

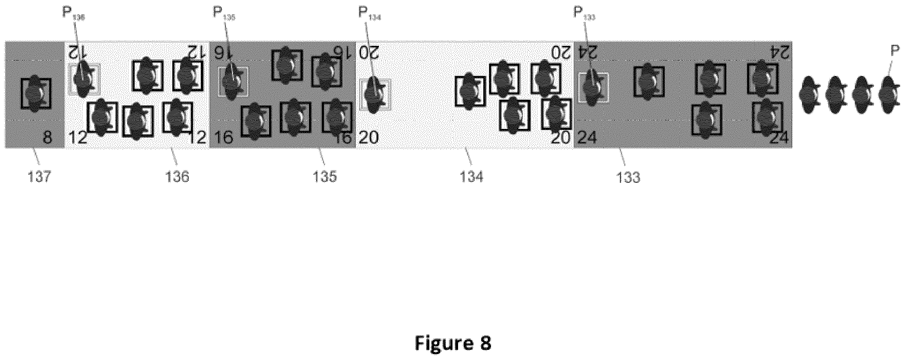

This causes the cloths (131, 132, 133, 134, 135, 136, 137, 138) to vary in size (length) according to the distance between the last passengers (P₁₃₁, P₁₃₂, P₁₃₃, P₁₃₄, P₁₃₅, P₁₃₆, P₁₃₇, P₁₃₈) of neighboring cloths, its length being directly proportional to this distance (Figure 7), with the minimum size depending on the number of passengers (P) in its respective row, and may be limited to a maximum value according to the conditions of the airport facilities. The last passenger (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138) determines the end of their cloth as they leave the system projection and sensing area (Figure 8).

Using the example of the 192 seat aircraft (AE), when boarding begins, the first passengers located in row 32 will begin to move on the virtual carpet (130) towards the boarding gate, and only after the last passenger (P₁₃₁) of cloth 32 (131) begins to move, the movement of the final division of cloth 32 (131) will begin, therefore, decreasing the length of the cloth of row 32 (131) and increasing the size of the next cloth, that is, the cloth of row 28 (132).

Similarly, the division between the cloth 28 (132) and 24 (133) will only start to move after the last passenger (P₁₃₂) of cloth 28 (132) moves, and so on for all the cloths of the static initial projection, that is, from cloth 32 (131), to cloths 28 (132), 24 (133), 20 (134), 16 (135), 12 (136). It should be noted that each of the cloths (131, 132, 133, 134, 135, 136, 137, 138) will completely disappear when the last passenger (P₁₃₁, P₁₃₂, P₁₃₃, P₁₃₄, P₁₃₅, P₁₃₆, P₁₃₇, P₁₃₈) leaves the virtual guide (130) surface.

After the cloth 12 (136) moves, the cloth 8 (137) will begin to emerge, which will advance along the carpet (130) path, forming at the minimum exemplary size, for example, 1.80 meters, and keeping it so while there is no passenger (P) positioned onto it. After passengers (P) enter the area of the cloth at turn, the movement will become organic by keeping the minimum exemplary size, e.g., 1.80.

Passengers (P) of cloth 8 (137) will have the entire path of the carpet (130) to position themselves onto and continue boarding. Thus, successively, cloth 8 (137) and then cloth 4 (38) will appear, obeying the concept of waves until completing the boarding of the first wave of the non-limiting example and then following with the next cloths until completing all the groups of 4 waves formed by 8 groups of passengers.

It should be noted that the example herein detailed describes the sequence of moving the cloths in descending order, which can, however, be performed in another appropriate order according to the boarding information/instructions.

Additionally, the activities of identifying the last passenger of the cloths movement, updating the end of cloth information of this cloth and moving the end of this cloth by moving or "pulling" the next cloth, may occur individually in one cloth or in pairs or groups of cloths or in parallel in all the cloths of the projection area, obeying the specific movement criteria disclosed herein: (i) the beginning of each new cloth follows the cloth in front of it (downstream); (ii) the end of each cloth awaits the movement of the last passenger above it.

This movement of all the cloths and their divisions follows an organic concept, and the virtual guide (130), through sensors on the ground or above or on the side of the passengers (P), identifies the movement thereof, creating orientation, formation, and displacement of the virtual guide (130). Therefore, this organic boarding format only depends on the previous selection of the aircraft (AE) model and the type of boarding, so that it proceeds with all the sorting of passengers (P) without the need for any other command.

This operation means of the virtual guide creates an effect of a living organism, since passengers will only be guided by the guide when accessing it. After that, there is no longer any need for the passenger to be guided by it, just following the passenger(s) in front of them as in a common line, as every movement of the cloths in the guide will adapt to the movement of passengers in size, speed, acceleration and stop. In this way, it is clear that it is the passengers who move the guide and not the guide which moves the passengers.

It is possible to imagine conducting the virtual guide also in a partially organic regime and in a manual regime.

In the case of a partially organic regime, it is possible to imagine a carpet having a division only between the 2 cloths at the front of the carpet, organically controlled, as described above. The formation and creation of the rear cloths is a consequence of the first cloth movement, but the rear panels would have additional configurations, such as minimum length when passengers on the carpet are stationary, and maximum length when moving.

In the manual control version, the control of the carpet can be performed by a human operator, who would manually control the advance of the first cloths to create an effect similar to the movement in the partially organic regime, carried out through a simple command given by the operator, advancing or stopping or even rewinding the cloths.

*Substep B7* comprises repeating substep B6 until the last cloth (138) of the virtual carpet (130) is displayed and moved in the direction of boarding and/or boarding is completed. Boarding completion can be determined by the boarding of the last passenger expected - P₁₃₈ in the example of boarding the first wave - or for another reason or corresponding instruction.

It is necessary to further emphasize that substep B2 of consulting and updating the data relevant to the boarding may occur as many times as necessary to update information and between any of the other steps and substeps or even repeating in sequence before another step.

Any other substeps of the second step can also be repeated, alternating with other substeps or even repeating in sequence before another substep, always depending on the specific conditions of each boarding situation and its development, which may include, but is not limited to, cases of access or numbering conflicts, passengers late for boarding, priority passengers, airport conditions, etc.

### C. Boarding completion step

The **boarding completion step** includes, but is not limited to, the activities of boarding completion, comprising the following method substeps:
C1 After projecting the last cloth (138) expected, project a final cloth (PF) with completion information, the size of which is dictated by the movement of the last passenger (P₁₃₈) expected to board;
C2 Compare the number of passengers (P) expected to board with the number of passengers (P) actually boarded and determine boarding completion;
C3 In case of discrepancy, repeat substeps C1 and C2 until completion; and
C4 Receive instruction to close the boarding procedure.

*Substep C1* comprises projecting a final cloth (PF) having completion information that can be, for example, but not limited to, a last call information *(last call)* or similar.

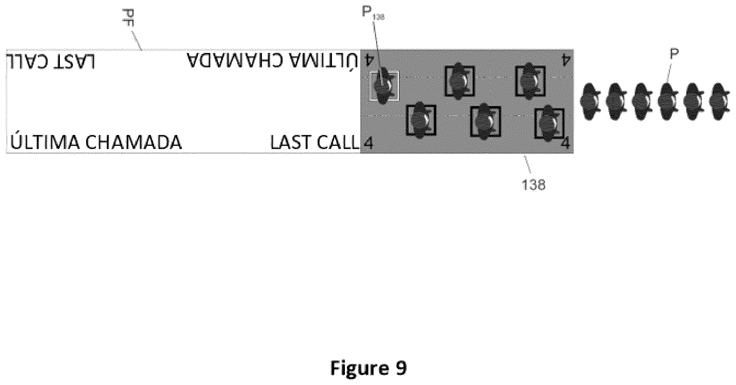

*Substep* C2 comprises comparing the number of passengers (P) expected to board with the number of passengers (P) actually boarded and determining boarding completion. In case of discrepancy, informing the airline and/or the airport authority if necessary. This step also comprises updating the virtual guide (130) projection and the monitors (120) and, eventually, the audible signaling devices, with one or more messages informing the end of the boarding advising the "last boarding call" (Figure 9) and/or informing the absence of one or more passengers and, eventually, informing the names of one or more of the missing passengers.

In a non-limiting embodiment of the disclosure, substep C2 further comprises the query by the server or central processor which processes data relevant to the boarding, for example, but not limited to airline data, aircraft (AE) data, boarding regime, ground and on-board staff data, passenger data and other information relevant to the airport operation, to update information/instructions. This substep C2 can be repeated one or more times, sequentially or individually or in groups, to update the information whenever necessary, the need for this repetition being defined according to each application. In case of absence or interruption of communication, the operation will be carried out based on previously stored predetermined information.

*Substep C3* comprises, in case of discrepancy, repeating the first C1 and second C2 substeps until completion and/or receiving a completion instruction.

*Substep* C4 comprises receiving from the airline and/or the authority responsible for the boarding and/or airport infrastructure and/or ground and/or on-board staff and/or similar the instruction to complete or close the boarding procedure.

It should be noted that any substeps of the third step can be repeated, alternating with other steps or even repeating in sequence before another step, which applies even to one or more steps of the first activity and/or of the second activity, always depending on the specific conditions of each boarding situation and its development, which may include, but is not limited to, cases of access or numbering conflicts, passengers late for boarding, priority passenger, airport conditions, etc.

### Equipment as disclosed herein

**Equipment for processing boarding information and generating an organic virtual guide** as disclosed herein, is equipment comprising a system as disclosed herein, including a computer-readable memory having recorded instructions for execution in a computer, capable of executing a method as disclosed herein, processing boarding information and generating a dynamic and organic virtual guide (130).

### Computer programs as disclosed herein

A **computer program for processing boarding information and generating an organic virtual guide** as disclosed herein is a set of instructions executed in a system disclosed herein for executing a method disclosed herein, for generating a dynamic and organic virtual guide (130).

### Final considerations

It should be noted that the virtual guide disclosed herein, despite being ingenious, is intuitive and simple to understand for the passenger, dispensing any additional tool for guiding passengers, complementary codes or signs, captions, instructions; and, which is very important, does not require the connection of the passenger with any devices, much less the assistance of the ground staff.

The virtual guide informs passengers, in the boarding lounge, their boarding position sequence, projecting sequential spaces, in the direction of passenger movement, sufficient to allow the physical accommodation of all passengers in each group, even in the boarding lounge.

It should also be noted that the method according to the invention can be executed independently of both the system of the disclosure, as a whole, or without the use of a virtual guide, being able to be coordinated, for example, by visual and/or audible command and/or voice of the ground staff, making use of the already installed infrastructure, for example, monitors, displays, signposts, paintings, etc. present at the airport.

The present disclosure provides a method, system, equipment and computer program that in a new and inventive way improve the solutions to problems of the prior art in aircraft boarding logistics.

### Final considerations

It will be readily understood by a PHOSITA that modifications can be made to the present disclosure without thereby departing from the concepts set out in the above description. Such modifications are to be considered within the scope of the present disclosure. Accordingly, the particular embodiments described in detail above are only illustrative and exemplary and not limiting as to the scope of the present disclosure, to which should be given the full extent of the appended claims and any and all equivalents thereto.

## Claims

1. A system for processing boarding information and generating an organic virtual guide, **characterized in that it comprises:**
(i) one or more servers;
(ii) one or more processors;
(iii) one or more communication and data networks;
(iv) one or more databases;
(v) one or more sets of information;
(vi) one or more sets of instructions;
(vii) one or more information/instruction acquisition devices (110);
(viii) one or more information/instruction display devices (120);
(ix) at least one computer program stored on a computer-readable medium,
wherein one or more of the information/instruction display devices (120) projects a dynamic, carpet-like virtual guide (130) formed by neighboring cloths (131, 132, 133, 134, 135, 136, 137, 138), indicating seat or row or group or wave numbers of a particular boarding regime.

2. The system according to claim 1, **characterized in that** the system associates the last passenger (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138) with a cloth end information.

3. The system according to claim 1, **characterized in that** the advancing of the cloths (131, 132, 133, 134, 135, 136, 137, 138) is organic, being controlled by the advancing of the last passenger (P₁₃₁, P₁₃₂, P₁₃₃, P₁₃₄, P₁₃₅, P₁₃₆, P₁₃₇, P₁₃₈) onto each cloth.

4. The system according to claim 1, **characterized in that** the beginning of each new cloth (131, 132, 133, 134, 135, 136, 137, 138) follows the cloth in front of it (downstream) and the end of each cloth (131, 132, 133, 134, 135, 136, 137, 138) waits for the last passenger to move (P₁₃₁, P₁₃₂, P₁₃₃, P₁₃₄, P₁₃₅, P₁₃₆, P₁₃₇, P₁₃₈) onto it.

5. The system according to claim 1, **characterized in that** the size of the cloths (131, 132, 133, 134, 135, 136, 137, 138) varies in length according to the distance between the last passengers (P₁₃₁, P₁₃₂, P₁₃₃, P₁₃₄, P₁₃₅, P₁₃₆, P₁₃₇, P₁₃₈).

6. The system according to claim 1, **characterized in that** servers, processors, databases, information/instruction acquisition devices (110), information/instruction display devices (120) and other devices and/or equipment are all interconnected by one or more communication and data networks.

7. The system according to claim 1, **characterized in that** the set of instructions is a set of steps and substeps that make up a method for processing boarding information and generating an organic virtual guide (130), executed by one or more components of the system, either alone or combined.

8. The system according to claim 1, **characterized in that** the information/instruction acquisition device (110) is an interface between the system and users and/or the airport infrastructure, and may include any device capable of processing and storing data and/or information and communicating via the communication and data network, comprising physical, analog, digital, light sensors and combinations thereof including cameras, lasers, reflectors, light barriers, conventional radars, doppler radars and other compatible means.

9. The system according to claim 1, **characterized in that** the information/instruction display device (120) is an interface between the system disclosed herein and the users and/or the airport infrastructure, comprising a set of visual signs formed by devices capable of projecting and/or emitting and/ or displaying images and lights and emitting visual and sound signals, being directly connected to the data processing center, comprising equipment and peripherals for image projection such as projectors, screens, TVs, monitors, light cannons, lights in general and other corresponding and similar elements.

10. A method for processing boarding information and generating an organic virtual guide, **characterized in that** it is executed by a system defined in claims 1 to 9, comprising the following main method steps:
A. Boarding preparation step;
B. Boarding step; and
C. Boarding completion step.

11. The method according to claim 10, **characterized in that** the boarding preparation step comprises the following method substeps:
A1 Receive instruction to start the boarding preparation procedure;
A2 Consult and update boarding information/instructions;
A3 Activate the information/instruction display devices (120) and start the projection of the dynamic virtual guide (130) in the form of a virtual carpet;
A4 Process boarding information and instructions and generate and project a first virtual carpet (130); and
A5 Activate the information/instruction acquisition devices (110) and detect and process the images of the first virtual carpet (130).

12. The method according to claim 11, **characterized in that** substep A4 comprises the processing of boarding information and instructions, by generating and projecting a first virtual carpet (130) formed by neighboring cloths (131, 132, 133, 134, 135, 136, 137, 138) with the seat or row or group or wave numbers of the particular boarding regime.

13. The method according to claim 11, **characterized in that** substep 4 includes removing (disregarding) seats (A) or rows for which there will be no passengers (P) or which are occupied only by priority passengers, adjusting the size of the cloths (131, 132, 133, 134, 135, 136, 137, 138) according to the number of passengers (P) of each seat or row or group or wave assigned to each cloth (131, 132, 133, 134, 135, 136, 137, 138).

14. The method according to claim 11, **characterized in that** substep A4 also includes activating one or more monitors (120) which display a mirroring of the projection area together with the next cloths (131, 132, 133, 134, 135, 136, 137, 138) of the virtual carpet (130) to be displayed.

15. The method according to claim 11, **characterized in that** substep A5 comprises activating the information/instruction acquisition devices (110) and detecting and processing the images of the first virtual carpet (130), starting the cameras or sensors for detecting the images of the displayed or projected virtual carpet (130), in addition to detecting the presence of people and/or objects on the virtual carpet.

16. The method according to claim 10, **characterized in that** the boarding step comprises the following method substeps:
B1 Receive instruction to start the boarding procedure;
B2 Consult and update boarding information/instructions;
B3 Instruct passengers (P) to position themselves on their corresponding cloths (131, 132, 133, 134, 135, 136, 137, 138) of the virtual carpet (130);
B4 Read and detect the position of passengers (P) on the cloths (131, 132, 133, 134, 135, 136, 137, 138) of the virtual carpet (130);
B5 Read and identify, in the boarding direction, the first and last passengers (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138);
B6 Identify the movement of the last passenger (P₁₃₁) of the first cloth (131) and move the end of the first cloth (131) in the boarding direction, by pulling the second (next) cloth (132); and
B7 Repeat substep B6 until the last cloth (138) of the virtual carpet (130) and/or until the boarding is complete.

17. The method according to claim 16, **characterized in that** substep B5 comprises reading and identifying, in the boarding direction, the first and last passengers (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138), associating the last passenger (P₁₃₁, P₁₃₂, P₁₃₃, P₁₃₄, P₁₃₅, P₁₃₆, P₁₃₇, P₁₃₈) of each cloth (131, 132, 133, 134, 135, 136, 137, 138) with a cloth end information, thereby detecting any position changes and thus detecting movement.

18. The method according to claim 16, **characterized in that** the beginning of each new cloth (131, 132, 133, 134, 135, 136, 137, 138) follows the cloth in front of it (downstream) and the end of each cloth (131, 132, 133, 134, 135, 136, 137, 138) waits for the last passenger to move (P₁₃₁, P₁₃₂, P₁₃₃, P₁₃₄, P₁₃₅, P₁₃₆, P₁₃₇, P₁₃₈) onto it.

19. The method according to claim 16, **characterized in that** substep B3 comprises formally instructing passengers (P) to position themselves on their corresponding cloths (131, 132, 133, 134, 135, 136, 137, 138) of the virtual carpet (130).

20. The method according to claim 16, **characterized in that** substep B4 comprises reading and detecting the position of all objects on the reading fields (cloths) of the virtual carpet (130), from the determination and delimitation of reading fields according to the cloths (131, 132, 133, 134, 135, 136, 137, 138) of the virtual carpet (130), filtering objects of interest from the images, identifying passengers (P) and their exact position on the carpet (130), and associating them with the carpet cloth on which they stand.

21. The method according to claim 16, **characterized in that** the reading, detecting and filtering can occur continuously or at predetermined time intervals.

22. The method according to claim 16, **characterized in that** the reading, detecting and filtering occur intermittently with read repetition and capturing between 0.1 and 100 milliseconds, preferably 50 milliseconds.

23. The method according to claim 10, **characterized in that** the boarding completion step comprises the following method substeps:
C1 After projecting the last cloth (138) expected, project a final cloth (PF) with completion information, the size of which is dictated by the movement of the last passenger (P₁₃₈) expected to board;
C2 Compare the number of passengers (P) expected to board with the number of passengers (P) actually boarded and determine completion of boarding;
C3 In case of discrepancy, repeat substeps C1 and C2 until completion; and
C4 Receive instruction to close the boarding procedure.

24. The method according to claim 23, **characterized in that** substep C1 comprises projecting a final cloth (PF) with completion information that may be, for example, but not limited to, a last call information or similar.

25. The method according to claim 23, **characterized in that** substep C2 further comprises a query by the server or central processor which processes data relevant to the boarding, which may be repeated one or more times, sequentially or individually or in groups, to update the information.

26. The method according to claim 23, **characterized in that** substep C3 comprises, in case of discrepancy, repeating substeps C1 and C2 until completion.

27. The method according to claim 23, **characterized in that** substep C4 comprises receiving from the airline and/or the authority responsible for departures and/or airport infrastructure and/or ground and/or on-board staff and/or similar an instruction to complete or close the boarding procedure.

28. Equipment for processing boarding information and generating an organic virtual guide, **characterized in that** it comprises a system as defined in claims 1 to 9, including a computer-readable memory with recorded instructions for execution on a computer, capable of executing a method as defined in claims 10 to 27, processing boarding information and generating a dynamic and organic virtual guide (130).

29. A computer-readable memory with recorded instructions for execution on a computer, **characterized in that** it is associated with one or more components of the system defined in claims 1 to 9 to execute a method as defined in claims 10 to 27, for generating a dynamic and organic virtual guide (130).
